# EUROPÄISCHE PATENTANMELDUNG

(11) **EP 4 290 279 A1**
(43) Veröffentlichungstag der Anmeldung: **13.12.2023**
(21) Anmeldenummer: 22178479.6
(22) Anmeldetag: 10.06.2022
(51) Int. Cl.: G01V 3/12, G01V 8/00, G01V 8/20

(54) **MIKROWELLENSCHRANKEN-SYSTEM**

(71) Anmelder: VEGA Grieshaber KG, 77709 Wolfach (DE)
(72) Erfinder: FISCHER, Michael, 72275 Alpirsbach (DE)
(74) Vertreter: Maiwald GmbH

(57) **Zusammenfassung**

Es wird ein Mikrowellenschranken-System beschrieben, mit:
einer ersten Mikrowellenschranke (110), deren Mikrowellen-Sendeeinheit einen elektrisch abstimmbaren Mikrowellen-Generator (600) aufweist, wobei die erste Mikrowellenschranke (110) eingerichtet ist, mit einer wählbaren Mikrowellen-Frequenz betrieben zu werden; und zumindest einer zweiten Mikrowellenschranke (120), deren Mikrowellen-Sendeeinheit einen elektrisch abstimmbaren Mikrowellen-Generator (600) aufweist, wobei die zweite Mikrowellenschranke (120) eingerichtet ist, mit einer wählbaren Mikrowellen-Frequenz betrieben zu werden;
und wobei das Mikrowellenschranken-System eingerichtet ist, Mikrowellen-Frequenz-Kanäle (210) in einem verfügbaren Frequenzbereich für Mikrowellenschranken für eine bereitgestellte Anzahl von Mikrowellenschranken des Mikrowellenschranken-Systems zu bestimmen; und den jeweiligen Mikrowellenschranken (110, 120) des Mikrowellenschranken-Systems jeweils einen Mikrowellen-Frequenz-Kanal (210) so zuzuordnen, dass eine gegenseitige Störung der Mikrowellenschranken (110, 120) vermindert wird.

## Beschreibung

### Gebiet der Erfindung

Die Erfindung betrifft ein Mikrowellenschranken-System und ein Verfahren zum Betreiben des Mikrowellenschranken-Systems.

### Hintergrund

Eine Mikrowellenschranke sendet typischerweise ein Dauerstrich-Mikrowellensignal in Richtung eines zugeordneten Empfängers aus. Wird der direkte Übertragungsweg von Sender zu Empfänger durch ein Objekt oder durch einen Füllstand in einem Behälter unterbrochen, macht sich dies durch einen fehlenden oder reduzierten Empfangspegel im Empfänger bemerkbar. Das Abfallen des Empfangspegels kann in einem Empfänger detektiert werden und in ein Schaltsignal umgewandelt werden. Um eine Richtung zu bestimmen, aus welcher ein Objekt die Schranke passiert, kann beispielsweise ein System mit zwei Empfängern und einem Sender oder zwei komplett unabhängig voneinander arbeitende Mikrowellenschranken verwendet werden. Passiert ein Objekt die so aufgebauten Schranken, kann aus der Schaltreihenfolge eine Richtung der Passage bestimmt werden. Werden die beiden Empfänger in einem System aus mehreren Mikrowellenschranken in geringem räumlichen Abstand voneinander betrieben, kann Mikrowellenstrahlung von einer Mikrowellen-Sendeeinheit einer Mikrowellenschranke eine Empfangseinheit einer benachbarten weiteren Mikrowellenschranke stören. Dies kann eine Empfindlichkeit und damit auch einen Störabstand, bzw. Signal-Rauschabstand, der einzelnen Empfangseinheit reduzieren. Ein solcher reduzierter Störabstand kann in einem Anstieg einer Wahrscheinlichkeit für Fehlfunktionen oder Fehlschaltungen der betroffenen Mikrowellenschranke resultieren. Um Störabstände bei benachbarten Mikrowellen-Empfangseinheiten zu erhöhen, können typischerweise unterschiedliche Polarisationsebenen für die benachbarten Mikrowellenschranken gewählt werden. Weiterhin können typischerweise Positionen von Sender und Empfänger benachbarter Mikrowellenschranke so vertauscht werden, dass ein Sender der einen Mikrowellenschranke benachbart zu einem Empfänger der anderen Mikrowellenschranke angeordnet wird. Damit kann der Sender der einen Mikrowellenschranke nicht auf direktem Wege den Empfänger der anderen Mikrowellenschranke stören. Dadurch kann eine Entkopplung der beiden Mikrowellenschranken erreicht werden.

### Offenbarung der Erfindung

Ab einer Anzahl von drei räumlich benachbart angeordnet betriebener Mikrowellenschranken kann der Störabstand mit dieser Maßnahme nicht mehr verbessert werden. Auch eine Entkopplung der Mikrowellenschranken mittels unterschiedlicher Polarisationsebenen der Mikrowellenstrahlung ist weniger effektiv je mehr Mikrowellenschranken in unmittelbarer Nähe zueinander betrieben werden. D.h. die Störbeeinflussung durch Mikrowellen-Sendeeinheiten in nicht zu der Mikrowellenschranke zugehörige, d.h. fremde Empfangseinheiten, kann sich mit der Anzahl der Mikrowellenschranken verstärkt auswirken. Um beispielsweise eine Position eines Objektes in einem Raum oder einen Füllstand in einem Behälter zu bestimmen, können dagegen mehr als zwei Mikrowellenschranken in geringem räumlichen Abstand zueinander notwendig sein.

Gemäß Aspekten der Erfindung wird ein Mikrowellenschranken-System, ein Verfahren zum Betreiben eines Mikrowellenschranken-Systems, ein Computerprogramm und eine Verwendung eines Mikrowellenschranken-Systems gemäß den Merkmalen der unabhängigen Ansprüche, vorgeschlagen. Vorteilhafte Ausgestaltungen sind Gegenstand der abhängigen Ansprüche sowie der nachfolgenden Beschreibung.

In dieser gesamten Beschreibung der Erfindung ist die Abfolge von Verfahrensschritten so dargestellt, dass das Verfahren leicht nachvollziehbar ist. Der Fachmann wird aber erkennen, dass viele der Verfahrensschritte auch in einer anderen Reihenfolge durchlaufen werden können und zu dem gleichen Ergebnis führen. In diesem Sinne kann die Reihenfolge der Verfahrensschritte entsprechend geändert werden und ist somit auch offenbart.

Gemäß einem Aspekt wird ein Mikrowellenschranken-System mit einer ersten Mikrowellenschranke und einer zweiten Mikrowellenschranke vorgeschlagen. Die erste Mikrowellenschranke weist eine Mikrowellen-Sendeeinheit mit einem elektrisch abstimmbaren Mikrowellen-Generator auf und ist eingerichtet, mit einer wählbaren Mikrowellen-Frequenz betrieben zu werden. Die zweite Mikrowellenschranke weist eine Mikrowellen-Sendeeinheit mit einem elektrisch abstimmbaren Mikrowellen-Generator auf und ist eingerichtet, mit einer wählbaren Mikrowellen-Frequenz betrieben zu werden. Dabei ist das Mikrowellenschranken-System eingerichtet, Mikrowellen-Frequenz-Kanäle in einem verfügbaren Frequenzbereich für Mikrowellenschranken für eine bereitgestellte Anzahl von Mikrowellenschranken des Mikrowellenschranken-Systems zu bestimmen und den jeweiligen Mikrowellenschranken des Mikrowellenschranken-Systems jeweils einen MikrowellenFrequenz-Kanal so zuzuordnen, dass eine gegenseitige Störung der Mikrowellenschranken minimiert wird.

Dabei kann der verfügbare Frequenzbereich in dem Mikrowellenschranken-System gespeichert sein und/oder für einen Betrieb des Mikrowellenschranken-Systems bereitgestellt werden.

Ein Mikrowellenschranken-System kann zumindest zwei Mikrowellenschranken aufweisen, um beispielsweise zwei Positionen eines Objektes innerhalb des Mikrowellenschranken-Systems zu detektieren, bzw. zu bestimmen.

Mit einer Vielzahl von Mikrowellenschranken innerhalb eines Mikrowellenschranken-Systems kann auch eine Bewegung eines Objektes und/oder eine Gestaltsänderung eines Objektes, beispielsweise mit einem Objekt in Form eines Füllgut, bestimmt werden, indem eine zeitliche Abfolge von Dämpfungen des Mikrowellen-Signals innerhalb der Vielzahl von Mikrowellenschranken bestimmt wird.

Eine Mikrowellenschranke kann eine Mikrowellen-Sendeeinheit aufweisen, die ein Mikrowellen-Signal generiert und in Richtung auf die Empfangseinheit ausstrahlt, und eine räumlich davon getrennte Empfangseinheit aufweisen, die jeweils einander zugeordnet sind. Zwischen der Mikrowellen-Sendeeinheit und der zugeordneten Empfangseinheit kann ein Kopplungspfad definiert werden, der den räumlichen Bereich charakterisiert, indem die Mikrowellen-Sendeeinheit und die Empfangseinheit mittels des Mikrowellen-Signals gekoppelt sind. Wird der direkte Übertragungsweg von der Mikrowellen-Sendeeinheit zu der Empfangseinheit durch ein Objekt oder durch einen Füllstand eines Mediums in einem Behälter unterbrochen, macht sich dies durch einen fehlenden oder reduzierten Empfangspegel in der Empfangseinheit bemerkbar. Das Abfallen des Empfangspegels kann in der Empfangseinheit detektiert werden und in ein Schaltsignal umgewandelt werden.

Dabei ist das Mikrowellen-Signal ein Signal, das auf der jeweiligen Mikrowellen-Frequenz der jeweiligen Mikrowellenschranke basiert und von der Mikrowellen-Sendeeinheit ausgesendet wird und von der jeweiligen Empfangseinheit empfangen wird, um eine Dämpfung des Mikrowellen-Signals im Kopplungspfad, insbesondere mittels der jeweiligen Empfangseinheit, zu bestimmen, um beispielsweise eine Position eines Objektes innerhalb des Kopplungspfades zu bestimmen.

Eine Anwesenheit eines Objektes innerhalb des Kopplung-Pfads kann bestimmt werden, indem, abhängig von einer Interaktion des Objekts in einem Kopplungs-Pfad zwischen der Mikrowellen-Sendeeinheit und der Empfangseinheit, eine Dämpfung des Mikrowellen-Signals, basierend auf der jeweiligen Mikrowellenfrequenz der jeweiligen Mikrowellenschranke, detektiert wird.

Die jeweilige Mikrowellen-Sendeeinheit einer jeweiligen Mikrowellenschranke kann eingerichtet sein, mittels einer elektrischen Abstimmung eines Mikrowellen-Generators der Mikrowellen-Sendeeinheit, mit einer wählbaren Mikrowellen-Frequenz betrieben zu werden. Zusätzlich oder alternativ kann die jeweilige Empfangseinheit einer jeweiligen Mikrowellenschranke eingerichtet sein, mittels einer elektrischen Abstimmung eines Mikrowellen-Generators der Empfangseinheit, mit einer wählbaren Mikrowellen-Frequenz betrieben zu werden, um ein von der Empfangseinheit empfangenes Mikrowellen-Signal selektiv, insbesondere in Bezug auf einen Mikrowellen-Frequenz-Kanal, zu betreiben und/oder das Mikrowellen-Signal entsprechend selektiv zu bestimmen.

Ein verfügbarer Frequenzbereich, der von Mikrowellenschranken benutzt werden kann, beschränkt sich im Allgemeinen auf lizenzfreie Frequenzbänder, die in Europa für lizenzfreie "Short-Range Devices" oder UWB-Geräte (UWB: Ultra-Wideband) reguliert sind. Für die Anwendung der Mikrowellenschranke sinnvoll nutzbare Frequenzbänder liegen beispielsweise im Bereich von 2,4 GHz bis 2,4835 GHz; und/oder 5,725 GHz bis 5,875 GHz; und/oder 24 GHz bis 24,25 GHz; und/oder 57 bis 64 GHz; und/oder 61 GHz bis 61,5 GHz; und/oder 122 GHz bis 123 GHz; und/oder 174,8 GHz bis 182 GHz; und/oder 185 GHz bis 190 GHz; und/oder 231,5 GHz bis 250 GHz und/oder 244 GHz bis 246 GHz.

Die zur Verfügung stehenden und oben angegebenen Frequenzbänder sind typischerweise ausreichend breit, um darin Mikrowellen-Frequenz-Kanäle für eine Vielzahl von Mikrowellenschranken zu definieren.

Beispielsweise kann das Frequenzband von 24 GHz bis 24,25 GHz mit einer Anzahl von Mikrowellen-Frequenz-Kanälen n = 20 zwischen einer unteren Frequenz fu= 24 GHz und einer oberen Frequenz fo = 24,25 GHz Mikrowellen-Frequenz-Kanäle der Breite Δf = 12,5 MHz definiert werden.

Durch eine Verteilung einer Vielzahl von Mikrowellen-Frequenz-Kanälen auf eine Vielzahl von Mikrowellenschranken kann eine gegenseitige Störbeeinflussung der jeweiligen Mikrowellenschranken in einem Mikrowellenschranken-System, entsprechend einer Anwendung eines Frequenz-Multiplexverfahrens (FDM = Frequency-Division Multiplexing), verringert werden.

Mit einem solchen Mikrowellenschranken-System kann eine Störbeeinflussung von mehreren Mikrowellenschranken verringert werden, die benachbart, insbesondere in geringem Abstand zueinander, betrieben werden. Denn bei benachbart betriebenen Mikrowellenschranken kann eine Mikrowellen-Sendeeinheit in eine Empfangseinheit einer benachbarten Mikrowellenschranke einstrahlen. Durch unterschiedliche MikrowellenFrequenz-Kanäle für unterschiedliche Mikrowellenschranken eines Mikrowellenschranken-Systems können Störabstände der einzelnen Mikrowellenschranken erhöht werden, da die jeweilige Mikrowellenschranke, insbesondere mittels der Empfangseinheit, das jeweils von der Mikrowellen-Sendeeinheit ausgestrahlte Mikrowellen-Signal selektiv, entsprechend dem zugeordneten Mikrowellen-Frequenz-Kanal, bestimmen kann, was wiederum eine Wahrscheinlichkeit und eine Häufigkeit von Fehlschaltungen oder Fehlfunktionen einer Mikrowellenschranke in dieser speziellen Konstellation des Mikrowellenschranken-Systems reduziert.

Um die Störbeeinflussung zu minimieren, können die Mikrowellen-Frequenz-Kanäle so gewählt werden, dass räumlich benachbarten Mikrowellenschranken frequenzmäßig nicht benachbarte Mikrowellen-Frequenz-Kanäle zugeordnet werden. D. h. mit anderen Worten, räumlich benachbarte unabhängige Mikrowellenschranken senden in frequenzmäßig nicht benachbarten Übertragungskanälen.

Gemäß einem Aspekt wird vorgeschlagen, dass die jeweilige Mikrowellenschranke des Mikrowellenschranken-Systems einen wählbaren Mikrowellen-Frequenz-Kanal aufweist in dem die jeweilige Mikrowellen-Sendeeinheit das Mikrowellen-Signal entsprechend dem gewählten Mikrowellen-Frequenz-Kanal aussendet und/oder die jeweilige Empfangseinheit das Mikrowellen-Signal entsprechend dem gewählten Mikrowellen-Frequenz-Kanal selektiv bestimmt.

Mittels einer jeweiligen Mikrowellenschranke, die mit einer wählbaren Mikrowellen-Frequenz für das Mikrowellen-Signal betrieben werden kann, kann eine höhere Flexibilität, insbesondere für eine Neukonfiguration von einer bestehenden Anordnung von Mikrowellenschranken in einem Mikrowellenschranken-System erreicht werden.

Die wählbare Mikrowellen-Frequenz für den Betrieb der jeweiligen Mikrowellenschranke, insbesondere mittels einer elektrische Abstimmung von Oszillatoren für das Generieren der Mikrowelle und/oder selektieren von Mikrowellen-Frequenz-Kanälen, ermöglicht einem Anwender für jede Mikrowellenschranke einen geeigneten Kanal zu wählen und jederzeit verändern zu können. Somit kann eine optimale Konfiguration von mehreren benachbarten Mikrowellenschranken in Bezug auf Störsicherheit gewährleistet werden.

Weiterhin kann durch den Einsatz von elektrisch abstimmbaren Oszillatoren für das Generieren von Mikrowellensignalen, ein Hardwareaufwand des Mikrowellenschranken-Systems reduziert werden.

Vorteilhafterweise kann ein solcher elektrisch abstimmbarer Oszillator eingerichtet sein, eine Frequenz temperaturstabil zu generieren, um den zur Verfügung stehenden Frequenzbereich in eine möglichst hohe Anzahl von Mikrowellen-Frequenz-Kanälen zu unterteilen, um die Mikrowellenschranken dann zuverlässig, insbesondere bei Temperaturschwankungen, innerhalb entsprechend schmaler Kanäle zu betreiben.

Vorteilhafterweise kann ein elektrisch abstimmbarer Oszillator eingerichtet sein, sehr schnell auf einzelne Mikrowellen-Frequenz-Kanäle abgestimmt zu werden. Ein solcher elektrisch abstimmbare Oszillator für das Generieren einer Mikrowellen-Frequenz ist in einem Ausführungsbeispiel unten beschrieben.

Gemäß einem Aspekt wird vorgeschlagen, dass die erste Mikrowellenschranke und die zweite Mikrowellenschranke jeweils eine Empfangseinheit aufweist und die jeweilige Empfangseinheit mit der jeweiligen Mikrowellen-Sendeeinheit mittels eines Mikrowellen-Signals, basierend auf dem jeweiligen Mikrowellen-Frequenzkanal, gekoppelt ist, um einen Kopplungs-Pfad zwischen der jeweiligen Mikrowellen-Sendeeinheit und der jeweiligen Empfangseinheit aufzubauen. Insbesondere kann das Mikrowellenschranken-System eingerichtet sein, eine Dämpfung des Mikrowellen-Signals in dem jeweiligen Kopplungs-Pfad zu bestimmten.

Gemäß einem Aspekt wird vorgeschlagen, dass die Mikrowellen-Sendeeinheit zumindest einer Mikrowellenschranke des Mikrowellenschranken-Systems eingerichtet ist und/oder eine Empfangseinheit der zumindest einen Mikrowellenschranke eingerichtet ist, mittels eines Mikrowellen-Transceivers, sowohl als Mikrowellen-Sendeeinheit als auch Empfangseinheit betrieben zu werden.

Mittels eines solchen Mikrowellen-Transceivers kann die jeweilige Mikrowellenschranke das Mikrowellen-Signal in unterschiedliche Richtungen des Kopplung-Pfades abstrahlen und empfangen, um eine gegenseitige Störung von Mikrowellenschranken zu vermindern, ohne mechanisch die Anordnung der Mikrowellenschranke zu verändern.

Gemäß einem Aspekt wird vorgeschlagen, dass die Empfangseinheit zumindest einer Mikrowellenschranke eingerichtet ist, die Dämpfung des Mikrowellen-Signals basierend auf einem, insbesondere mittels der Empfangseinheit selektierten, Mikrowellen-Frequenz-Kanal zu bestimmen.

Dadurch kann die Mikrowellenschranke Mikrowellen-Signale einer anderen Mikrowellenschranke, deren Betrieb auf einem anderen Mikrowellen-Frequenz-Kanal basiert, herausfiltern, um eine gegenseitige Störung der jeweiligen Mikrowellenschranken zu vermindern. Eine solche Selektion des Mikrowellen-Frequenz-Kanals durch die Empfangseinheit kann mittels eines Zwischenfrequenz-Filters durchgeführt werden.

Gemäß einem Aspekt wird vorgeschlagen, dass das Mikrowellenschranken-System eingerichtet ist, abhängig von einer bereitgestellten Anordnung der jeweiligen Mikrowellenschranken in dem Mikrowellenschranken-System den jeweiligen Mikrowellenschranken einen jeweiligen Mikrowellen-Frequenz-Kanal so zuzuordnen, dass räumlich angrenzenden Mikrowellenschranken des Mikrowellenschranken-Systems Frequenz-Kanäle zugeordnet werden, dass eine gegenseitige Störung durch Mikrowellen-Einstrahlung räumlich benachbarter Mikrowellenschranken in dem Mikrowellenschranken-System vermindert wird.

Gemäß einem Aspekt wird vorgeschlagen, dass das Mikrowellenschranken-System eingerichtet ist, abhängig von der bereitgestellten Anordnung der jeweiligen Mikrowellenschranken in dem Mikrowellenschranken-System den Mikrowellenschranken MikrowellenFrequenz-Kanäle so zuzuordnen, dass jeweils räumlich aneinander angrenzenden Mikrowellenschranken des Mikrowellenschranken-Systems frequenzmäßig nicht angrenzende Mikrowellen-Frequenz-Kanäle zugeordnet werden.

Gemäß einem Aspekt wird vorgeschlagen, dass zumindest eine der Mikrowellenschranken eingerichtet ist, basierend auf einem modulierten Mikrowellen-Signal betrieben zu werden, um eine gegenseitige Störung von zumindest zwei Mikrowellenschranken, die räumlich benachbart betrieben werden, in dem Mikrowellenschranken-System zu vermindern.

Dazu kann die Mikrowellen-Sendeeinheit der jeweiligen Mikrowellenschranke eingerichtet sein, basierend auf dem Mikrowellen-Frequenz-Kanal, ein moduliertes Mikrowellen-Signal zu generieren und/oder die jeweilige Empfangseinheit eingerichtet sein, basierend auf einem modulierten Mikrowellen-Signal, die Dämpfung des Mikrowellen-Signals zu bestimmen.

Gemäß einem Aspekt wird vorgeschlagen, dass die Mikrowellen-Sendeeinheit der zumindest einen Mikrowellenschranke eingerichtet ist, ein Mikrowellen-Signal zu generieren, das moduliert ist, und eine mit der so eingerichteten Sendeeinheit gekoppelten Empfangseinheit eingerichtet ist, eine Dämpfung des Mikrowellen-Signals, basierend auf dem modulierten Mikrowellen-Signal, selektiv zu detektieren.

Entsprechend diesem Aspekt kann mittels des Mikrowellen-Signals eine Kennung von der Mikrowellen-Sendeeinheit an die Empfangseinheit übertragen werden, wobei die jeweilige Empfangseinheit eingerichtet ist die korrekte Kennung zu überprüfen, um eine gegenseitige Störung von Mikrowellenschranken zu vermindern. Dazu kann die jeweilige Mikrowellenschranke eingerichtet sein, basierend auf dem, mit der Kennung modulierten Mikrowellen-Signal, betrieben zu werden.

Gemäß einem Aspekt wird vorgeschlagen, dass das Mikrowellen-Signal in Bezug auf eine Amplitude und/oder eine Frequenz und/oder eine Phase einer Frequenz des Mikrowellen-Signals moduliert ist; und/oder das Mikrowellen-Signal zeitlich moduliert ist.

Gemäß einem Aspekt wird vorgeschlagen, dass das jeweilige Mikrowellen-Signal zumindest einer Mikrowellenschranke des Mikrowellenschranken-Systems mit einem Code moduliert ist, und die jeweilige Mikrowellenschranke eingerichtet ist, basierend auf dem, mit dem Code modulierten Mikrowellen-Signal, betrieben zu werden.

Gemäß einem Aspekt wird vorgeschlagen, dass eine einzelne Empfangseinheit sowohl die Empfangseinheit der ersten Mikrowellenschranke als auch die Empfangseinheit der zweiten Mikrowellenschranke ist.

Mit einer einzelnen Empfangseinheit für eine Vielzahl von Mikrowellen-Sendeeinheiten, die jeweils auf die einzelne Empfangseinheit ausgerichtet ist, kann ein Mikrowellenschranken-System mit einem reduzierten Hardwareaufwand konfiguriert werden. Beispielsweise können vier Mikrowellen-Sendeeinheiten mit einer Empfangseinheit kombiniert werden, um vier Mikrowellenschranken zu realisieren. Mit einer solchen Konfiguration von Mikrowellenschranken kann eine Position eines Objektes im Raum oder ein Füllstand in einem Behälter bestimmt werden. Der Hardwareaufwand ist jedoch in diesem Beispiel um insgesamt drei Empfangseinheiten reduziert. Jeder Mikrowellen-Sendeeinheit kann bei dieser Konfiguration ein eigener Mikrowellen-Frequenz-Kanal zugeordnet werden, wobei die Empfangseinheit beispielsweise sequenziell, oder mit einer beliebigen anderen Zugriffsart, auf die einzelnen zugeordneten Mikrowellen-Frequenzkanäle abgestimmt wird, um das von den einzelnen Mikrowellen-Sendeeinheiten abgestrahlte Mikrowellen-Signal, insbesondere in Bezug auf seine Leistung, zu bestimmen. Dadurch kann das abgestrahlte Mikrowellen-Signal bestimmt werden, ohne von den Mikrowellen-Sendeeinheiten, die auf anderen Mikrowellen-Frequenz-Kanälen betrieben werden, gestört zu werden. Die gemeinsame Empfangseinheit kann die bestimmten Mikrowellen-Signale, entsprechend den einzelnen Mikrowellen-Frequenz-Kanälen, an einen Nutzer des Mikrowellenschranken-Systems melden oder anderweitig ausgeben. Wird der Übertragungsweg von einer beliebigen Mikrowellen-Sendeeinheit zu der gemeinsam genutzten Empfangseinheit durch ein Objekt oder einen Füllstand eines Mediums unterbrochen oder gedämpft, verringert sich die empfangene Leistung des Mikrowellen-Signals und beim Unterschreiten einer Schwelle für diese Leistung kann die Empfangseinheit eingerichtet sein, ein Schaltsignal zu generieren.

Gemäß einem Aspekt wird vorgeschlagen, dass das Mikrowellenschranken-System eingerichtet ist, die Mikrowellen-Frequenz-Kanäle den jeweiligen Mikrowellen-Sendeeinheiten der jeweiligen Mikrowellenschranken, und insbesondere den Mikrowellen-Empfangseinheiten, des Mikrowellenschranken-Systems zeitlich aufeinanderfolgend und/oder zeitlich zyklisch zuzuordnen.

Dabei kann eine zeitlich zyklische Zuordnung eine Zuordnung sein, die jeweils nach Ablauf eines Zeitintervalls erfolgt.

Gemäß einem Aspekt wird vorgeschlagen, dass bei dem Mikrowellenschranken-System zumindest eine Mikrowellenschranke eingerichtet ist, die Mikrowellen-Sendeeinheit mit der gekoppelten Empfangseinheit, mittels des modulierten Mikrowellen-Signals, signalmäßig zu koppeln, um Informationen von der Mikrowellen-Sendeeinheit zu der jeweils zugeordneten Empfangseinheit zu übertragen.

Dabei unterscheidet sich die signalmäßige Kopplung der Mikrowellen-Sendeeinheit von der Kopplung, die eine betriebsmäßige Kopplung ist, in dem bei der signalmäßigen Kopplung zusätzliche Informationen, die über den Betrieb einer Mikrowellenschranke hinausgehen an die Empfängereinheit übertragen wird. Insbesondere kann die Information, die an die Empfangseinheit von der Mikrowellen-Sendeeinheit übertragen wird, ein Betriebsstatus der Mikrowellen-Sendeeinheit und/oder eine Diagnoseinformation sein, um eine Fehlfunktion der Mikrowellenschranke zu vermeiden.

Mit anderen Worten kann die Anordnung einer Mikrowellenschranke mit räumlich getrennt angeordneter Mikrowellen-Sendeeinheit und Empfangseinheit zur Datenübertragung entsprechend einer Richtfunkstrecke verwendet werden. Ein auf das Mikrowellen-Signal der Mikrowellen-Sendeeinheit aufmoduliertes Datensignal kann in der Empfängereinheit wieder demoduliert und ausgewertet werden. So lassen sich beispielsweise bei freier Übertragungsstrecke Diagnosedaten, wie z.B. eine Sendeleistung der Mikrowellen-Sendeeinheit, ein Wert einer aktuellen Versorgungsspannung, etc., von der Mikrowellen-Sendeeinheit übertragen werden und mittels der Empfangseinheit ausgewertet werden. Ein eventueller Ausfall der Mikrowellen-Sendeeinheit oder eine Degeneration der Übertragungsstrecke, kann so frühzeitig erkannt werden und wird somit nicht als "belegte Übertragungsstecke" bei fehlendem Signal am Empfänger missinterpretiert. Eine Degeneration des Übertragungsweges kann vorliegen, wenn z.B. ein Baum in die Übertragungsstrecke wächst und mit der Zeit das Sendesignal dadurch zunehmend gedämpft wird.

Bei der Übertragung der Sendeleistung kann in der Empfangseinheit mittels der bestimmten Empfangsleistung einfach die Dämpfung auf dem Kopplungs-Pfad bestimmt werden. Somit lassen sich Rückschlüsse auf das Objekt im Übertragungsweg der Schranke ziehen, z.B. auf die Größe des Objekts oder dessen Transparenz für das Mikrowellensignal.

Gemäß einem Aspekt wird vorgeschlagen, dass das modulierte Mikrowellen-Signal eine Information über eine ausgesendete Mikrowellen-Leistung der Mikrowellen-Sendeeinheit aufweist, um durch die Übertragung der Mikrowellen-Leistung an die jeweilige Empfangseinheit die Dämpfung im Kopplungs-Pfad zwischen der Mikrowellen-Sendeeinheit und der Empfangseinheit zu bestimmen.

Wenn die Mikrowellen-Leistung an die Empfangseinheit übertragen wird, lassen sich Rückschlüsse auf das Objekt im Übertragungsweg der Schranke ziehen, z.B. Rückschlüsse in Bezug auf die Größe des Objekts oder dessen Transparenz für das Mikrowellensignal.

Gemäß einem Aspekt wird vorgeschlagen, dass beide Funktions-Einheiten der jeweiligen Mikrowellenschranke, d. h. sowohl die Mikrowellen-Sendeeinheit als auch die jeweilige Empfangseinheit der Mikrowellenschranke als sogenannte Transceiver aufgebaut werden. In diesem Fall ist eine bidirektionale Datenübertragung, insbesondere basierend auf unterschiedlichen Mikrowellen-Frequenz-Kanälen, möglich. Beide Funktions-Einheiten der jeweiligen Mikrowellenschranke können sich in diesem Fall beispielsweise gegenseitig überwachen. Fällt eine dieser Funktions-Einheiten aus, kann eine Missinterpretation eines belegten Kopplung-Pfades, bzw. einer Übertragungsstrecke, verhindert werden.

Gemäß einem Aspekt wird vorgeschlagen, dass die jeweiligen Mikrowellenschranken des Mikrowellenschranken-Systems mit einer Auswerte-Einheit des Mikrowellenschranken-Systems gekoppelt sind, um die unterschiedliche Positionen zumindest eines Objektes und/oder eine Bewegung des Objektes zu detektieren.

Es wird ein Verfahren zum Betreiben eines Mikrowellenschranken-Systems vorgeschlagen, das eine erste Mikrowellenschranke aufweist, wobei die erste Mikrowellenschranke eingerichtet ist, mit einer wählbaren Mikrowellen-Frequenz betrieben zu werden und zumindest eine zweite Mikrowellenschranke aufweist, wobei die zweite Mikrowellenschranke eingerichtet ist, mit einer wählbaren Mikrowellen-Frequenz betrieben zu werden, mit den Schritten:
- Bereitstellen einer Anzahl von Mikrowellenschranken, die in dem Mikrowellenschranken-System betrieben werden;
- Bereitstellen eines verfügbaren Frequenzbereichs für den Betrieb des Mikrowellenschranken-Systems;
- Bestimmen von verfügbaren Mikrowellen-Frequenz-Kanälen für den Betrieb des Mikrowellenschranken-Systems;
- Zuordnen der verfügbaren Mikrowellen-Frequenz-Kanälen zu der Anzahl von Mikrowellenschranken in so einer Weise, dass eine gegenseitige Störung der Mikrowellenschranken verringert wird.

Gemäß einem Aspekt wird vorgeschlagen, dass das Verfahren zusätzlich die Schritte aufweist:
- Bereitstellen einer Anordnung der jeweiligen Mikrowellenschranken in dem Mikrowellenschranken-System;
- Zuordnen der Mikrowellen-Frequenz-Kanäle zu räumlich angrenzenden Mikrowellenschranken, so dass eine gegenseitige Störung durch Mikrowellen-Einstrahlung räumlich benachbarter Mikrowellenschranken in dem Mikrowellenschranken-System vermindert wird; und zusätzlich oder optional:
- Zuordnen der Mikrowellen-Frequenz-Kanäle an die jeweiligen Mikrowellenschranken der Anzahl der Mikrowellenschranken so, dass jeweils räumlich aneinander angrenzenden Mikrowellenschranken des Mikrowellenschranken-Systems frequenzmäßig nicht angrenzende Frequenz-Kanäle zugeordnet werden.

Gemäß einem Aspekt wird vorgeschlagen, dass in einem der oben beschriebenen Verfahren die Mikrowellen-Frequenz-Kanäle des zugewiesenen und/oder verfügbaren Mikrowellen-Frequenzspektrums so auf die jeweiligen Mikrowellenschranken verteilt werden, dass räumlich benachbarte Mikrowellenschranken Mikrowellen-Frequenz-Kanäle zugewiesen werden, die frequenzmäßig möglichst weit auseinanderliegen, um eine gegenseitige Störung der zumindest zwei Mikrowellenschranken in dem Mikrowellenschranken-System zu minimieren.

Es wird ein Computerprogramm vorgeschlagen, welches Befehle umfasst, die bei der Ausführung des Computerprogramms durch einen Computer diesen veranlassen, eines der oben beschriebenen Verfahren auszuführen.

Mit einem solchen Computerprogramm kann das Verfahren einfach in unterschiedlichen Umgebungen und/oder Anwendungen und/oder Plattformen implementiert werden.

Es wird ein computerlesbarer Datenträger vorgeschlagen, auf dem das oben beschriebene Computerprogramm gespeichert ist.

Dadurch kann das Verfahren leicht auf unterschiedliche Steuer- und Kontrollgeräte implementiert werden.

Es wird eine Verwendung eines der oben beschriebenen Mikrowellenschranken-Systeme zur Überwachung einer Position eines Objektes vorgeschlagen, wobei das Objekt insbesondere Schüttgut ist.

Durch die Verwendung des Mikrowellenschranken-Systems zur Überwachung einer Position eines Objektes kann ein Produktionsprozess besonders sicher überwacht werden.

Es sei noch angemerkt, dass die verschiedenen oben und/oder nachfolgend beschriebenen Ausführungsformen miteinander kombiniert werden können.

Im Folgenden werden Aspekte eines Verfahren zum Auswählen eines Betriebs-Kanals für eine Mikrowellenschranke und eine Mikrowellenschranke beschrieben, das mit dem oben beschriebenen Mikrowellenschranken-System und/oder dem oben beschriebenen Verfahren zum Betreiben eines Mikrowellenschranken-Systems insgesamt und/oder in Aspekten kombiniert werden kann.

Gemäß einem Aspekt wird ein Verfahren zum Auswählen eines Betriebs-Kanals für eine erste Mikrowellenschranke vorgeschlagen, wobei die erste Mikrowellenschranke eine Mikrowellen-Sendeeinheit und eine Mikrowellen-Empfangseinheit aufweist, die insbesondere räumlich voneinander getrennt sind.

Das Verfahren weist die folgenden Schritte auf:
- Bereitstellen einer Vielzahl verfügbarer Frequenz-Kanäle für Mikrowellenschranken;
- Bestimmen einer Fremdsignal-Amplitude für zumindest einen Frequenz-Kanal der Vielzahl der verfügbaren Frequenz-Kanäle mittels der Mikrowellen-Empfangseinheit;
- Bestimmen eines Betriebs-Kanals, ausgewählt aus den verfügbaren Frequenz-Kanälen, und basierend auf der zumindest einen bestimmten Fremdsignal-Amplitude der verfügbaren Frequenz-Kanäle, um Störungen bei einem Betreiben der ersten Mikrowellenschranke durch ein Fremdsignal zu minimieren; und
- Übertragen des bestimmten Betriebs-Kanals von der Mikrowellen-Empfangseinheit an die Mikrowellen-Sendeeinheit, zum Betreiben der ersten Mikrowellenschranke auf dem Betriebs-Kanal.

Die erste Mikrowellenschranke kann eine Mikrowellen-Sendeeinheit aufweisen, die ein Mikrowellen-Signal generiert und in Richtung auf die Empfangseinheit ausstrahlt, und eine räumlich davon getrennte Mikrowellen-Empfangseinheit aufweisen, die jeweils einander zugeordnet sind. Zwischen der Mikrowellen-Sendeeinheit und der zugeordneten Empfangseinheit kann ein Kopplungs-Pfad definiert werden, der den räumlichen Bereich charakterisiert, in dem die Mikrowellen-Sendeeinheit und die Mikrowellen-Empfangseinheit mittels des Mikrowellen-Signals betriebsmäßig gekoppelt sind. Wird der direkte Übertragungsweg im Kopplungs-Pfad von der Mikrowellen-Sendeeinheit zu der Mikrowellen-Empfangseinheit durch ein Objekt und/oder durch einen Füllstand eines Mediums in einem Behälter unterbrochen, macht sich dies durch einen fehlenden Empfangspegel oder einen reduzierten Empfangspegel des Mikrowellen-Signals in der Mikrowellen-Empfangseinheit bemerkbar. Das Abfallen des Empfangspegels kann in der Mikrowellen-Empfangseinheit detektiert werden und beispielsweise in ein Schaltsignal, insbesondere zur Prozessüberwachung, umgewandelt werden.

Dabei ist das Mikrowellen-Signal ein Signal, das auf der jeweiligen Mikrowellen-Frequenz der jeweiligen Mikrowellenschranke basiert und von der Mikrowellen-Sendeeinheit ausgesendet wird und von der jeweiligen Mikrowellen-Empfangseinheit empfangen wird, um eine Dämpfung des Mikrowellen-Signals im Kopplungs-Pfad, insbesondere mittels der jeweiligen Mikrowellen-Empfangseinheit, zu bestimmen, um beispielsweise eine Anwesenheit eines Objektes innerhalb des Kopplungspfades zu detektieren.

Die jeweilige Mikrowellen-Sendeeinheit einer jeweiligen Mikrowellenschranke kann eingerichtet sein, insbesondere mittels einer elektrischen Abstimmung eines Mikrowellen-Generators der Mikrowellen-Sendeeinheit, mit einer wählbaren Mikrowellen-Frequenz betrieben zu werden. Zusätzlich oder alternativ kann die jeweilige Mikrowellen-Empfangseinheit einer jeweiligen Mikrowellenschranke eingerichtet sein, insbesondere mittels einer elektrischen Abstimmung eines Mikrowellen-Generators der Mikrowellen-Empfangseinheit, mit einer wählbaren Mikrowellen-Frequenz betrieben zu werden, um ein von der Empfangseinheit empfangenes Mikrowellen-Signal selektiv, insbesondere in Bezug auf einen Mikrowellen-Frequenz-Kanal, für einen Betrieb der Mikrowellenschranke auszuwerten und/oder zu bestimmen.

Dadurch kann die erste Mikrowellenschranke eingerichtet sein, mit dem Betriebs-Kanal betrieben zu werden und den Betriebs-Kanal aus Fremdsignalen herauszufiltern, um eine Störung der ersten Mikrowellenschranken durch Fremdsignale zu vermindern. Eine solche Selektion des Mikrowellen-Frequenz-Kanals kann durch die Mikrowellen-Empfangseinheit mittels eines Zwischenfrequenz-Filters durchgeführt werden.

Eine Anwesenheit eines Objektes innerhalb des Kopplung-Pfads kann bestimmt werden, indem, abhängig von einer Interaktion des Objekts in einem Kopplungs-Pfad zwischen der Mikrowellen-Sendeeinheit und der Mikrowellen-Empfangseinheit, eine Dämpfung des Mikrowellen-Signals, basierend auf der jeweiligen Mikrowellen-Frequenz der jeweiligen Mikrowellenschranke, detektiert wird.

Fremdsignale können Signale sein, die von der Mikrowellen-Empfangseinheit detektiert werden und beispielsweise von einer weiteren Mikrowellen-Sendeeinheit einer weiteren Mikrowellenschranke und/oder von einer anderen Mikrowellen-Quelle generiert werden. Diese Fremdsignale können insbesondere durch eine, mittels der Mikrowellen-Empfangseinheit bestimmten, Fremdsignal-Amplitude charakterisiert werden. Um Störungen, insbesondere des zuverlässigen Betriebes der betreffenden Mikrowellenschranke, zu minimieren und somit den Störabstand bzw. den Signal-Rauschabstand möglichst groß zu machen, sollte die Fremdsignal-Amplitude in dem bestimmten Betriebs-Kanal möglichst klein sein.

Ein verfügbarer Frequenzbereich, der von Mikrowellenschranken benutzt werden kann, beschränkt sich im Allgemeinen auf lizenzfreie Frequenzbänder, die in Europa für lizenzfreie. "Short-Range Devices" reguliert sind. Für die Anwendung der jeweiligen Mikrowellenschranke sinnvoll nutzbare Frequenzbänder liegen beispielsweise im Bereich von 2,4 GHz bis 2,4835 GHz; und/oder 5,725 GHz bis 5,875 GHz; und/oder 24 GHz bis 24,25 GHz; und/oder 57 bis 64 GHz; und/oder 61 GHz bis 61,5 GHz; und/oder 122 GHz bis 123 GHz; 174,8 GHz bis 182 GHz; und/oder 185 GHz bis 190 GHz; und/oder 231,5 GHz bis 250 GHz und/oder 244 GHz bis 246 GHz.

Die zur Verfügung stehenden und oben angegebenen Frequenzbänder sind typischerweise ausreichend breit, um darin Mikrowellen-Frequenz-Kanäle für eine Vielzahl von Mikrowellenschranken zu definieren.

Beispielsweise kann das Frequenzband von 24 GHz bis 24,25 GHz mit einer Anzahl von Mikrowellen-Frequenz-Kanälen n = 20 zwischen einer unteren Frequenz fu= 24 GHz und einer oberen Frequenz fo = 24,25 GHz Mikrowellen-Frequenz-Kanäle der Breite Δf = 12,5 MHz definiert werden.

Durch eine Verteilung einer Vielzahl von Mikrowellen-Frequenz-Kanälen auf eine Vielzahl von Mikrowellenschranken kann eine gegenseitige Störbeeinflussung der jeweiligen Mikrowellenschranken in einem System aus Mikrowellenschranken, entsprechend einer Anwendung eines Frequenz-Multiplexverfahrens (FDM = Frequency-Division Multiplexing), verringert werden.

In einem solchen System aus Mikrowellenschranken kann eine Störbeeinflussung von mehreren Mikrowellenschranken verringert werden, die benachbart, insbesondere in geringem Abstand zueinander, betrieben werden. Denn bei benachbart betriebenen Mikrowellenschranken kann eine Mikrowellen-Sendeeinheit in eine Empfangseinheit einer benachbarten Mikrowellenschranke einstrahlen. Durch unterschiedliche MikrowellenFrequenz-Kanäle für unterschiedliche Mikrowellenschranken in einem Mikrowellenschranken-System können Störabstände der einzelnen Mikrowellenschranken erhöht werden, da die jeweilige Mikrowellenschranke mittels der Empfangseinheit das jeweils von der Mikrowellen-Sendeeinheit ausgestrahlte Mikrowellen-Signal selektiv, entsprechend dem zugeordneten Mikrowellen-Frequenz-Kanal, bestimmen kann, was wiederum eine Wahrscheinlichkeit und eine Häufigkeit von Fehlschaltungen in dieser speziellen Konstellation in dem Mikrowellenschranken-System reduziert.

Der Betriebs-Kanal ist dann der Mikrowellen-Frequenz-Kanal, der bestimmt wurde um Störungen durch ein Fremdsignal zu minimieren und mit dem die Mikrowellenschranke betrieben wird.

Der verfügbare Frequenzbereich für die jeweilige Mikrowellenschranke kann dadurch bereitgestellt werden, dass er aus einem Speicherbereich der jeweiligen Mikrowellenschranke abgerufen wird und/oder für einen Betrieb der jeweiligen Mikrowellenschranke mittels eines Interfaces bereitgestellt wird.

Zum Übertragen des bestimmten Betriebs-Kanals von der Mikrowellen-Empfangseinheit an die Mikrowellen-Sendeeinheit kann die erste Mikrowellenschranke eine Kommunikationseinheit aufweisen, um die Mikrowellen-Empfangseinheit mit der Mikrowellen-Sendeeinheit monodirektional und/oder bidirektional zu koppeln. Mittels der Mikrowellen-Empfangseinheit kann der Betriebs-Kanal bestimmt werden und mittels der Kommunikationseinheit kann der bestimmte Betriebs-Kanal von der Mikrowellen-Empfangseinheit an die Mikrowellen-Sendeeinheit übertragen werden. Dabei kann die Kommunikationseinheit zumindest zwei Kommunikations-Teileinheiten aufweisen, wobei die Mikrowellen-Empfangseinheit eine Kommunikations-Teileinheit aufweist und die Mikrowellen-Sendeeinheit die zweite Kommunikations-Teileinheit aufweist, die jeweils für die Übertragung des bestimmten Betriebs-Kanals von der Mikrowellen-Empfangseinheit an die Mikrowellen-Sendeeinheit eingerichtet sind.

Für das Bestimmen des Betriebs-Kanals kann die Mikrowellen-Empfangseinheit die jeweilige Fremdsignal-Amplitude für zumindest einen Teil der Vielzahl der verfügbaren Frequenz-Kanäle bestimmen, um Störungen bei dem Betreiben der ersten Mikrowellenschranke durch Fremdsignale zu minimieren. Beispielsweise kann derjenige verfügbare Frequenz-Kanal als Betriebs-Kanal ausgewählt werden, der eine möglichst geringe Fremdsignal-Amplitude aufweist. Dazu kann die erste Mikrowellenschranke eingerichtet sein, eine Sequenz zum Aktivieren der ersten Mikrowellenschranke zu durchlaufen, die als Startsequenz und/oder zeitlich zyklisch wiederholt durchlaufen werden kann. Die Mikrowellen-Empfangseinheit kann eingerichtet sein, in einer Phase der Sequenz zum Aktivieren die jeweils zugehörige Mikrowellen-Sendeeinheit zu deaktivieren, um die Bestimmung der Fremdsignal-Amplitude zu verbessern.

Beispielsweise kann die Sequenz zum Aktivieren die folgenden Schritte nach einem Starten der Mikrowellenschranke oder nach einer Störung der Mikrowellenschranke aufweisen:
- Prüfen zumindest eines Teiles der verfügbaren Frequenz-Kanäle auf eine Amplitude eines Fremdsignals;
- Bestimmen des Signal-/Rauschverhältnis für den jeweiligen Frequenz-Kanal;
- wiederholen dieser Prüfung, bis ein Frequenz-Kanal gefunden ist, indem mit dem bestimmten Fremdsignal ein ausreichend hohes Signal-/Rauschverhältnis auf diesem Frequenz- Kanal erreicht werden kann;
- bestimmen dieses Frequenz-Kanals als Betriebs-Kanal für den Betrieb der ersten Mikrowellenschranke;
- zusätzlich kann die Information über die Amplitude der Fremdsignale in den unterschiedlichen verfügbaren Frequenz-Kanälen gespeichert werden.

Das Signal-/Rauschverhältnis kann durch Bestimmen der Fremdsignal-Amplitude im Verhältnis zu einem gespeicherten Empfangssignal und/oder zu einem, insbesondere mittels der Mikrowellen-Empfangseinheit, bestimmten Empfangssignal bei aktivierter Mikrowellen-Sendeeinheit bestimmt werden.

Bei der Bestimmung der Betriebs-Kanäle in einem System mit einer Vielzahl von Mikrowellenschranken können verfügbare Frequenz-Kanäle an einige der Vielzahl der Mikrowellenschranken auch doppelt vergeben werden. Dies ist insbesondere dann der Fall, wenn die betreffenden Mikrowellenschranken mit gleichem Betriebs-Kanal räumlich weit getrennt voneinander in dem System aus Mikrowellenschranken angeordnet sind.

In einer Sequenz zum Aktivieren der Mikrowellenschranke, in einem System aus einer Vielzahl von Mikrowellenschranken, können Mikrowellen-Sendeeinheiten von einzelnen Mikrowellenschranken oder von allen Mikrowellenschranken phasenweise deaktiviert und aktiviert werden.

Die Sequenz zum Aktivieren der Mikrowellenschranke kann auch während des laufenden Betriebs durchlaufen werden, um einen automatischen Wechsel der Frequenz-Kanäle zu erreichen, und damit Störungen durch Fremdsignale zu vermindern.

Für den Betrieb der ersten Mikrowellenschranke kann die Mikrowellen-Sendeeinheit der ersten Mikrowellenschranke eingerichtet sein, ein Mikrowellen-Signal mit einer Frequenz entsprechend dem übermittelten bestimmten Betriebs-Kanal zu generieren.

Beispielsweise können mit diesem Verfahren eine Vielzahl von benachbarten Mikrowellenschranken die jeweiligen Betriebs-Kanäle aus den Mikrowellen-Frequenz-Kanälen so bestimmen, dass benachbarte Mikrowellenschranken frequenzmäßig nicht benachbarte Mikrowellen-Frequenz-Kanäle zugeordnet werden, um die Störbeeinflussung zu minimieren. D. h. mit anderen Worten, benachbarte unabhängige Mikrowellenschranken senden nach der Bestimmung der jeweiligen Betriebs-Kanäle nicht in benachbarten Frequenz-Kanälen.

Vorteilhafterweise ist es bei diesem Verfahren nicht notwendig, genaue Vorkenntnis über den Einsatzzweck oder Fachwissen des Anwenders zu haben, um die Mikrowellen-Sendeeinheit und/oder die Mikrowellen-Empfangseinheit aufeinander passend einzustellen und damit Störungen zu vermindern. Die hier beschriebene automatische Bestimmung während einer Inbetriebnahme bzw. im Störungsfall mittels der Sequenz zur Aktivierung, entsprechend dem oben beschriebenen Verfahren, bietet hier deutlich mehr Komfort und Sicherheit.

Das Übertragen des bestimmten Betriebs-Kanals von der Mikrowellen-Empfangseinheit zur Mikrowellen-Sendeeinheit kann durch eine monodirektionale oder bidirektionale signalmäßige Kopplung, insbesondere mittels einer Kommunikationseinrichtung zur Kommunikation, der beiden Einheiten erfolgen. Eine solche signalmäßige Kopplung kann beispielsweise mittels einer Versorgungsleitung der Mikrowellen-Empfangseinheit bzw. der Mikrowellen-Sendeeinheit und/oder einer separaten kabelgebundenen Kopplung erfolgen und/oder mittels einer drahtlosen signalmäßigen Kopplung, wie einer Funkverbindung, z.B. via Bluetooth erfolgen.

Die Bestimmung des Betriebs-Kanals kann alternativ oder zusätzlich beim Vorliegen von Störungen erfolgen.

Diese signalmäßige Kopplung der beiden Einheiten kann eingerichtet sein, zusätzlich Diagnoseinformationen zu übertragen. Beispielsweise kann die Mikrowellen-Sendeeinheit bei einem Defekt auf der Seite der Mikrowellen-Sendeeinheit der Mikrowellen-Empfangseinheit eine Störungsmeldung übermitteln, sodass die Mikrowellen-Empfangseinheit einem Anwender eine Störmeldung signalisieren kann.

Vorteilhafterweise können, durch das hier beschriebene Verfahren zum automatischen Auswählen des Betriebs-Kanals und der signalmäßigen Kopplung der Mikrowellen-Sendeeinheit mit der Mikrowellen-Empfangseinheit, die unabhängig von der betriebsmäßigen Kopplung (via Mikrowellen) der beiden Einheiten erfolgen kann, Fehlschaltungen der jeweiligen Mikrowellenschranke aufgrund von anderen Hochfrequenz-Signalen vermieden und/oder vermindert werden.

Gemäß einem Aspekt wird vorgeschlagen, dass die jeweiligen Mikrowellenschranken eines Systems einer Vielzahl von Mikrowellenschranken mit einer Auswerte-Einheit gekoppelt sind, um die unterschiedliche Positionen zumindest eines Objektes und/oder eine Bewegung des Objektes zu detektieren. Alternativ oder zusätzlich kann eine Mikrowellenschranke der Vielzahl der Mikrowellenschranken eingerichtet sein, die unterschiedlichen Positionen zumindest eines Objektes und/oder eine Bewegung des Objektes zu detektieren.

Gemäß einem Aspekt wird vorgeschlagen, dass die Mikrowellen-Empfangseinheit der ersten Mikrowellenschranke und die Mikrowellen-Sendeeinheit der ersten Mikrowellenschranke, mittels einer Kommunikationseinheit, eingerichtet sind, signalmäßig miteinander gekoppelt zu werden, um den bestimmten Betriebs-Kanal von der Mikrowellen-Empfangseinheit der ersten Mikrowellenschranke an die Mikrowellen-Sendereinheit der ersten Mikrowellenschranke zu übertragen.

Dazu kann die Kommunikationseinheit zumindest zwei Teileinheiten aufweisen, wobei die Mikrowellen-Sendeeinheit die eine Teileinheit aufweist und die Mikrowellen-Empfangseinheit die entsprechende zweite Teileinheit aufweist.

Gemäß einem Aspekt wird vorgeschlagen, dass die Kommunikationseinheit eingerichtet ist, drahtgebunden und/oder drahtlos, insbesondere drahtlos via Bluetooth und/oder via Mikrowellen, insbesondere der Mikrowellen der ersten Mikrowellenschranke, und/oder WLAN signalmäßig miteinander gekoppelt zu werden.

Für die signalmäßige Kopplung mittels des Mikrowellen-Signals der ersten Mikrowellenschranke kann die Mikrowellen-Sendeeinheit eingerichtet sein, das Mikrowellen-Signal zu modulieren und/oder die Mikrowellen-Empfangseinheit eingerichtet sein, das modulierte Mikrowellen-Signal zu demodulieren.

Die signalmäßige Kopplung kann eingerichtet sein, monodirektionale oder bidirektionale Kommunikation zwischen der Mikrowellen-Empfangseinheit und der Mikrowellen-Sendeeinheit bereitzustellen.

Gemäß einem Aspekt wird vorgeschlagen, dass die erste Mikrowellenschranke räumlich benachbart zu zumindest einer zweiten Mikrowellenschranke angeordnet ist; und der Betriebs-Kanal der ersten Mikrowellenschranke bestimmt wird, während die Mikrowellen-Sendeeinheit der zweiten Mikrowellenschranke auf einem zweiten Betriebs-Kanal betrieben wird.

Gemäß einem Aspekt wird vorgeschlagen, dass die erste Mikrowellenschranke und die zweite Mikrowellenschranke beliebige Mikrowellenschranken in einem System aus einer Vielzahl von jeweils benachbart angeordneten Mikrowellenschranken sind.

Gemäß einem Aspekt wird vorgeschlagen, dass Stör-Strahlungen, die durch einen Betrieb der Sendeeinheit der zweiten Mikrowellenschranke auf dem zweiten Betriebs-Kanal hervorgerufen wird, von der ersten Mikrowellenschranke als Fremdsignal-Amplitude interpretiert wird, um den Betriebs-Kanal der ersten Mikrowellenschranke zu bestimmen. Der Betriebs-Kanal der ersten Mikrowellenschranke kann dann aus den verfügbaren Frequenz-Kanälen abhängig von der gemessenen Fremdsignal-Amplitude in den einzelnen Frequenz-Kanälen bestimmt werden.

Gemäß einem Aspekt wird vorgeschlagen, dass die zweite Mikrowellenschranke eingerichtet ist, eines der oben beschriebenen Verfahren, entsprechend der ersten Mikrowellenschranke, durchzuführen.

Gemäß einem Aspekt wird vorgeschlagen, dass die erste Mikrowellenschranke signalmäßig mit der zweiten Mikrowellenschranke gekoppelt ist, um den zweiten Betriebs-Kanal, mittels der ersten Mikrowellenschranke, zu bestimmen und/oder den zweiten Betriebskanal an die erste Mikrowellenschranke zu übertragen und/oder um eine von der Empfangseinheit der zweiten Mikrowellenschranke bestimmte Fremdsignal-Amplitude an die erste Mikrowellenschranke zu übertragen.

In einem System aus einer Vielzahl von Mikrowellenschranken kann die erste Mikrowellenschranke eingerichtet sein, insbesondere entsprechend einem Master-Slave Verfahren, die Betriebs-Kanäle zu bestimmen, nachdem die jeweiligen Mikrowellenschranken die bestimmten Fremdsignal-Amplituden an die erste Mikrowellenschranke übertragen hat. Die erste Mikrowellenschranke kann eingerichtet sein, die von ihr bestimmten Betriebs-Kanäle für die jeweiligen Mikrowellenschranken an die jeweiligen Mikrowellenschranken zu übertragen und die jeweiligen Mikrowellenschranken können eingerichtet sein, diese übertragenen Betriebs-Kanäle für den Betrieb der jeweiligen Mikrowellenschranke einzustellen. D. h. bei einer Vielzahl von Mikrowellenschranken in einem System können alle Mikrowellen-Sendereinheiten und Mikrowellen-Empfangseinheiten eingerichtet sein, mit allen anderen Mikrowellen-Sendeeinheiten und Mikrowellen-Empfangseinheiten zu kommunizieren. Insbesondere kann die Bestimmung des jeweiligen Betriebs-Kanals für die Vielzahl von Mikrowellenschranken erfolgen, nachdem durch die Vielzahl von Mikrowellenschranken Fremdsignal-Amplituden bestimmt wurden und an die erste Mikrowellenschranke übertragen wurden. Mit diesem Verfahren kann verhindert werden, dass Störsignale von anderen Mikrowellen-Sendeeinheiten oder sonstigen Mikrowellen-Quellen zu Fehlschaltungen führen.

Gemäß einem Aspekt wird vorgeschlagen, dass für das oben beschriebene Verfahren die Mikrowellen-Sendeeinheit und/oder die Mikrowellen-Empfangseinheit der zweiten Mikrowellenschranke, mittels einer Kommunikationseinheit, eingerichtet ist, signalmäßig miteinander gekoppelt zu werden, um den bestimmten Betriebs-Kanal von der Mikrowellen-Empfangseinheit der zweiten Mikrowellenschranke an die Mikrowellen-Sendereinheit der zweiten Mikrowellenschranke zu übermitteln

Gemäß einem Aspekt wird vorgeschlagen, dass die jeweils entsprechende Kommunikationseinheit der ersten Mikrowellenschranke und/oder die jeweils entsprechende Kommunikationseinheit der zweiten Mikrowellenschranke eingerichtet sind, via Bluetooth und/oder via Mikrowellen, insbesondere der jeweiligen Mikrowellenschranke, und/oder WLAN signalmäßig miteinander gekoppelt zu werden.

Es wird eine Mikrowellenschranke vorgeschlagen, mit
- einer Mikrowellen-Sendeeinheit;
- einer Mikrowellen-Empfangseinheit; und
- einer Kommunikationseinheit, die eingerichtet ist, die Mikrowellen-Empfangseinheit mit der Mikrowellen-Sendeeinheit signalmäßig zu koppeln, um einen Betriebs-Kanal für den Betrieb der Mikrowellenschranke von der Mikrowellen-Empfangseinheit an die Mikrowellen-Sendereinheit zu übertragen.

Dazu kann die Kommunikationseinheit zumindest zwei Teileinheiten aufweisen, wobei die Mikrowellen-Sendeeinheit die eine Teileinheit aufweist und die Mikrowellen-Empfangseinheit die entsprechende zweite Teileinheit aufweist.

Gemäß einem Aspekt wird vorgeschlagen, dass die Mikrowellen-Empfangseinheit der Mikrowellenschranke eingerichtet ist, eine Fremdsignal-Amplitude für zumindest einen Frequenz-Kanal einer Vielzahl verfügbaren Frequenz-Kanäle für den Betrieb der Mikrowellenschranke zu bestimmen.

Dazu kann die Mikrowellenschranke eingerichtet sein, für die Bestimmung der Fremdsignal-Amplitude die Mikrowellen-Sendeeinheit zu deaktivieren.

Gemäß einem Aspekt wird vorgeschlagen, dass die Mikrowellenschranke - eine Kommunikationseinheit aufweist, die eingerichtet ist, die Mikrowellen-Empfangseinheit mit einer weiteren Mikrowellenschranke signalmäßig zu koppeln, um einen zweiten Betriebs-Kanal für den Betrieb der weiteren Mikrowellenschranke, mittels der Mikrowellenschranke, festzulegen und/oder den zweiten Betriebskanal an die weitere Mikrowellenschranke zu übertragen und/oder um eine von der Empfangseinheit der weiteren Mikrowellenschranke bestimmte Fremdsignal-Amplitude an die erste Mikrowellenschranke zu übertragen. Auch die so eingerichtete Kommunikationseinheit kann, wie oben beschrieben, zumindest zwei Teileinheiten aufweisen.

Mittels der so eingerichteten Kommunikationseinheit kann eine ausgewählte Mikrowellen-Sendeeinheit und/oder eine ausgewählte Mikrowellen-Empfangseinheit eingerichtet sein, insbesondere entsprechend einem Master-Slave-Verfahren, die Betriebs-Kanäle für eine Vielzahl von Mikrowellenschranken zu bestimmen, und an die jeweiligen Mikrowellen-Sendeeinheiten der Vielzahl der Mikrowellenschranken zu übertragen.

Gemäß einem Aspekt wird vorgeschlagen, dass die Mikrowellenschranke eingerichtet ist, eines der oben beschriebenen Verfahren durchzuführen.

Gemäß einem Aspekt wird vorgeschlagen, dass die Mikrowellenschranke mittels der Kommunikationseinheit eingerichtet ist, eine Diagnoseinformation von der Mikrowellen-Sendeeinheit an die Mikrowellen-Empfangseinheit zu übertragen, um eine Fehlfunktion der Mikrowellenschranke zu vermeiden.

Es sei noch angemerkt, dass die verschiedenen oben und/oder nachfolgend beschriebenen Ausführungsformen miteinander kombiniert werden können.

### Ausführungsbeispiele

Ausführungsbeispiele der Erfindung werden mit Bezug auf die Figuren 1 bis 7 dargestellt und im Folgenden näher erläutert. Es zeigt:
- Figur 1: ein Mikrowellenschranken-System;
- Figur 2: eine Anzahl von Mikrowellen-Frequenz-Kanälen;
- Figur 3: ein Diagramm mit Mikrowellen-Frequenz-Kanälen;
- Figur 4: ein Mikrowellenschranken-System;
- Figur 5: ein Mikrowellenschranken-System;
- Figur 6: einen Sender einer Mikrowellenschranke; und
- Figur 7: einen Empfänger einer Mikrowellenschranke.

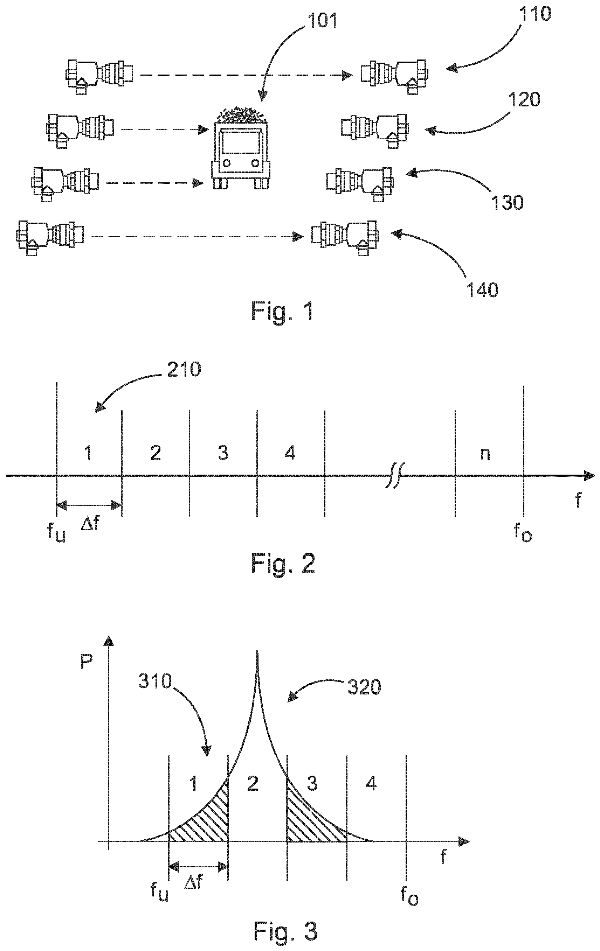

Die Figur 1 skizziert ein Mikrowellenschranken-System mit einer ersten Mikrowellenschranke 110 und einer zweiten Mikrowellenschranke 120 innerhalb eines Systems aus vier Mikrowellenschranken 110 bis 140. Dabei weist die erste Mikrowellenschranke 110 eine Mikrowellen-Sendeeinheit mit einem elektrisch abstimmbaren Mikrowellen-Generator auf und ist eingerichtet, mit einer wählbaren Mikrowellen-Frequenz betrieben zu werden. Die zweite Mikrowellenschranke 120 weist entsprechend eine Mikrowellen-Sendeeinheit mit einem elektrisch abstimmbaren Mikrowellen-Generator auf und ist entsprechend eingerichtet, mit einer wählbaren Mikrowellen-Frequenz betrieben zu werden. Dabei ist das Mikrowellenschranken-System eingerichtet, Mikrowellen-Frequenz-Kanäle in einem verfügbaren Frequenzbereich für Mikrowellenschranken für die erste Mikrowellenschranke 110 und die zweite Mikrowellenschranke 120 des Mikrowellenschranken-Systems zu bestimmen und entsprechend der ersten Mikrowellenschranke 110 und der zweiten Mikrowellenschranke 120 des Mikrowellenschranken-Systems jeweils einen Mikrowellen-Frequenz-Kanal so zuzuordnen, dass eine gegenseitige Störung der ersten Mikrowellenschranke und der zweiten Mikrowellenschranke minimiert wird. Eine Position eines Objektes in dem Mikrowellenschranken-System kann detektiert werden, indem das Objekt 101 mit einem jeweiligen Kopplungs-Pfad zwischen der jeweiligen Mikrowellen-Sendeeinheit und einer jeweiligen Empfangseinheit so wechselwirkt, dass ein von der jeweiligen Mikrowellen-Sendeeinheit in Richtung der jeweiligen Empfangseinheit ausgesandten Mikrowellensignalen gedämpft wird. Das Mikrowellenschranken-System kann entsprechend auf die zwei weiteren Mikrowellenschranken 130 und 140 erweitert werden, um beispielsweise verschiedene Position eines Objektes 101 innerhalb des Mikrowellenschranken-Systems zu bestimmen.

Die Figur 2 skizziert schematisch einen Wertebereich von Mikrowellen-Frequenzen f, die für einen Betrieb einer Mikrowellenschranke zugelassen sind, mit einer unteren Frequenz fu und einer oberen Frequenz fo, die in einer Anzahl von n Mikrowellen-Frequenz-Kanälen mit einer jeweiligen Breite von Δf aufgeteilt sind. Einer jeweiligen Mikrowellenschranke in einem Mikrowellenschranken-System kann entsprechend ein Mikrowellen-Frequenz-Kanal in diesem Wertebereich von Mikrowellen-Frequenzen f zugeordnet werden, um eine gegenseitige Störung der Mikrowellenschranken zu minimieren.

Die Figur 3 skizziert schematisch ein Diagramm mit Mikrowellen-Frequenz-Kanälen entsprechend Figur 2, wobei der zulässige Frequenzbereich zwischen einer unteren Frequenz fu und einer oberen Frequenz fo in vier Mikrowellen-Frequenz-Kanäle unterteilt wurde. Zusätzlich ist über der Frequenz eine Leistung, bzw. ein Leistungsspektrum P 320 einer Mikrowellen-Sendereinheit einer Mikrowellenschranke aufgetragen, der ein Mikrowellen-Frequenz-Kanal mit der Nummer 2 zugeordnet wurde und entsprechend eine Mikrowellenstrahlung im zweiten Kanal aussendet. Dabei kann auf den benachbarten ersten Kanal 310 und den benachbarten dritten Kanal, durch die endliche Breite des Leistungsspektrums der Mikrowellenstrahlung 320 der Mikrowellen-Sendeeinheit, Mikrowellenstrahlung entfallen, die ein Signal/Rauschverhältnis für eine Mikrowellenschranke deren Mikrowellen-Sendeeinheit in den benachbarten Mikrowellen-Frequenz-Kanälen betrieben wird, verschlechtert.

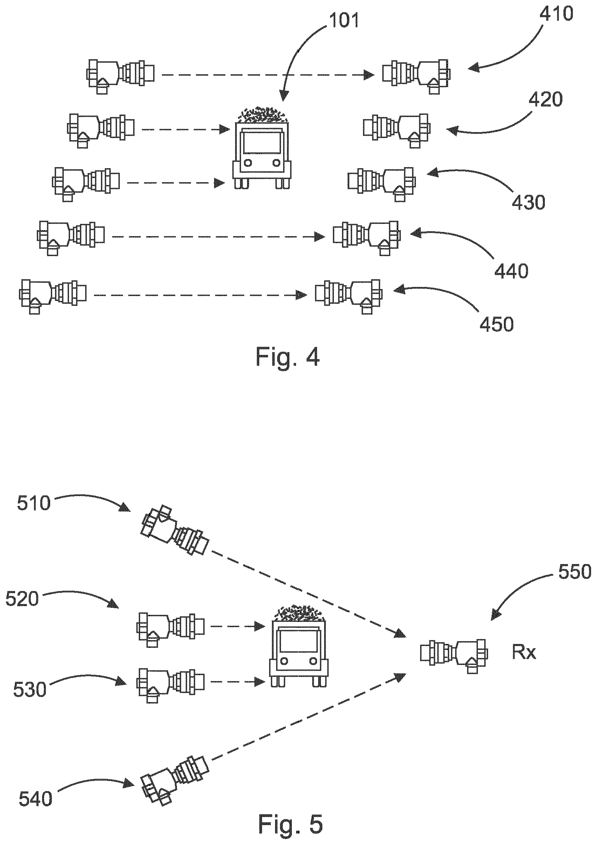

Die Figur 4 skizziert schematisch ein Mikrowellenschranken-System mit fünf Mikrowellenschranken 410 bis 450, die benachbart betrieben werden. Bei dieser Anordnung der fünf Mikrowellenschranken des Mikrowellenschranken-Systems werden den jeweiligen Mikrowellenschranken jeweilige Mikrowellen-Frequenz-Kanäle so zugeordnet, dass eine gegenseitige Störung durch Mikrowellen-Einstrahlung räumlich benachbarter Mikrowellenschranken in dem Mikrowellenschranken-System vermindert wird. Hierbei werden jeweils räumlich aneinander angrenzenden Mikrowellenschranken des Mikrowellenschranken-Systems frequenzmäßig nicht angrenzende Frequenz-Kanäle zugeordnet. D. h. der Mikrowellenschranke 410 wird beispielsweise der Kanal 1 zugeordnet; der Mikrowellenschranke 420 wird der Kanal 3 zugeordnet; der Mikrowellenschranke 430 wird der Kanal 5 zugeordnet; der Mikrowellenschranke 440 wird der Kanal 2 zugeordnet; und der Mikrowellenschranke 450 wird entsprechend der Kanal 4 zugeordnet. Dabei sind die Mikrowellen-Frequenz-Kanäle 1 bis 5 frequenzmäßig in aufsteigender Abfolge aneinander angrenzend in einem Mikrowellen-Frequenzbereich, insbesondere zwischen einer unteren Frequenz fu und einer oberen Frequenz fo, angeordnet.

Die Figur 5 skizziert schematisch ein Mikrowellenschranken-System mit vier Mikrowellen-Sendeeinheiten 510 bis 540 und einer einzelnen Empfangseinheit 550, wobei die einzelne Empfangseinheit 550 die Empfangseinheit für alle Mikrowellenschranken 510 bis 540 des Mikrowellenschranken-Systems ist. Das bedeutet, dass der jeweilige Kopplung-Pfad der jeweiligen Mikrowellenschranke zwischen den Mikrowellen-Sendeeinheiten 510 bis 540 und der Empfangseinheit 550 aufgebaut wird. Insbesondere ist die jeweilige Mikrowellen-Sendeeinheit 510 bis 540 eingerichtet, ein Mikrowellen-Signal zu generieren, das moduliert ist und/oder mittels unterschiedlicher Mikrowellen-Frequenz-Kanälen mit der Empfangseinheit 550 gekoppelt ist. Die Empfangseinheit 550 ist eingerichtet, eine Dämpfung des Mikrowellen-Signals, basierend auf dem modulierten Mikrowellen-Signal und/oder entsprechend dem zugeordneten Mikrowellen-Frequenz-Kanal, selektiv zu detektieren.

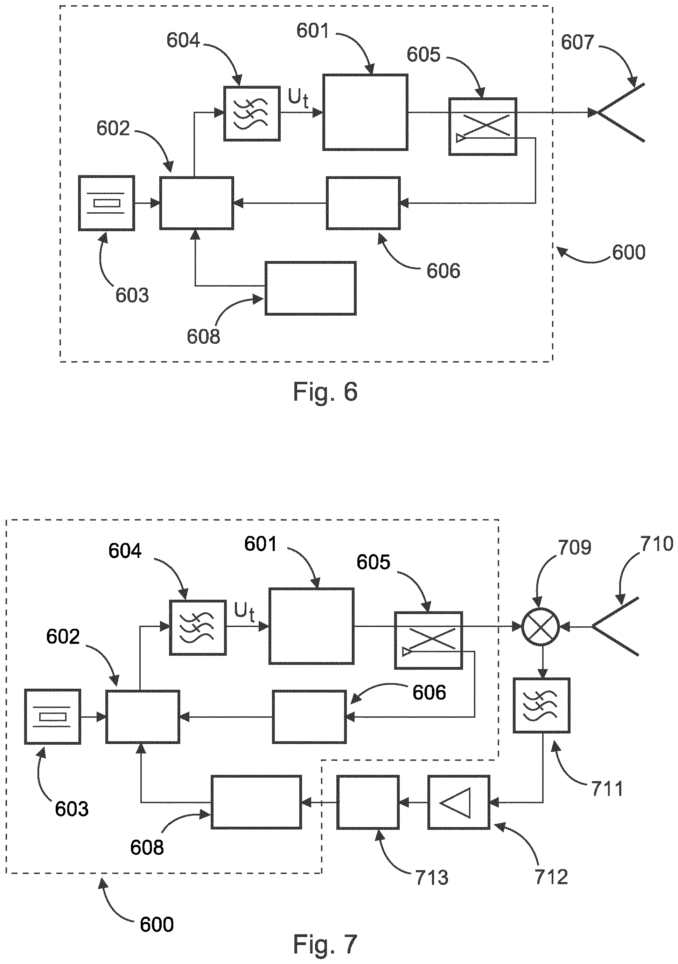

Die Figur 6 skizziert schematisch ein Blockschaltbild eines Senders einer Mikrowellen-Sendeeinheit von einer Mikrowellenschranke, die eingerichtet ist, mit einer wählbaren Mikrowellen-Frequenz betrieben zu werden. Dazu wird ein spannungsgesteuerter Mikrowellenoszillator 601 (VCO = voltage controlled oscillator), gemäß dem Blockschaltbild der Figur 6, in einer Phasenregelschleife betrieben. In der Phasenregelschleife wird der spannungsgesteuerte Mikrowellenoszillator 601 mittels eines PLL-Bausteins 602 (PLL = phase-locked loop) phasenstarr an einen sehr stabilen Referenzoszillator 603 gekoppelt. Vorzugsweise kann als Referenzoszillator 603 ein temperaturkompensierter Quarzoszillator (TCXO = temperature compensated crystal oscillator) verwendet werden. Mit dieser phasenstarren Kopplung lässt sich die hervorragende Stabilität des Referenzoszillators 603 auf den sehr viel höherfrequenten Mikrowellenoszillator 601 übertragen.

Der spannungsgesteuerte Mikrowellenoszillator 601 wird über eine von dem PLL-Baustein 602 und mittels eines Schleifenfilters 604 erzeugten Regelspannung Ut abgestimmt, wobei das Schleifenfilter 604 sowohl mit dem PLL Baustein 602, als auch mit dem spannungsgesteuerte Mikrowellenoszillator 601 gekoppelt ist. Der Regelkreis schließt sich, indem ein Teil des Ausgangssignals des spannungsgesteuerten Mikrowellenoszillators 601 mittels eines, mit einem Ausgang des spannungsgesteuerten Mikrowellenoszillators 601 elektrisch gekoppelten, Kopplers 605 ausgekoppelt wird und mittels eines, an den Koppler 605 elektrisch gekoppelten, optionalen Vorteilers 606 dem PLL-Baustein 602 zugeführt wird. Dieses Signal wird mittels des PLL-Bausteins 602 in einem Phasenkomparator des PLL-Bausteins 602 mit dem Signal des Referenzoszillators 603 verglichen.

Eine im Phasenkomparator entstehende Phasendifferenz der beiden Eingangssignale des PLL-Bausteins 602, nämlich von dem Referenzoszillator 603 und dem Ausgang des spannungsgesteuerten Mikrowellenoszillators 601, wird durch die Regelung sofort wieder ausgeglichen, so dass mittels des spannungsgesteuerten Mikrowellenoszillators 601 ein sehr stabiles und rauscharmes Mikrowellen-Sendesignal generiert wird.

Die Programmierung des PLL-Bausteins 602 und damit auch die Frequenzeinstellung des Mikrowellen-Sendesignals, welches über den Koppler 605 einer Sendeantenne 607 zugeführt wird, erfolgt vorzugsweise mittels eines Mikrocontrollers 608 oder einer anderen Prozessoreinheit. Viele auf dem Markt befindlichen spannungsgesteuerten Oszillatoren weisen interne Koppler und Vorteiler auf. In diesem Fall entfallen der Koppler 605 und der Vorteiler 606 als separate Bausteine und der spannungsgesteuerte Mikrowellenoszillator 601 weist einen zusätzlichen Vorteiler-Ausgang auf, der wiederum mit dem PLL-Baustein elektrisch gekoppelt wird.

Eine Änderung des Sendekanals wird mittels des Prozessors 608 in den PLL-Baustein 602 programmiert. Der oben beschriebene Regelkreis sorgt dafür, dass der spannungsgesteuerter Mikrowellenoszillator 601 schnell auf die neue gewünschte Mikrowellen-Frequenz und damit auch die Mikrowellenschranke auf einen neuen Mikrowellen-Frequenz-Kanal abgestimmt wird.

Die Figur 7 skizziert schematisch ein Blockschaltbild eines Empfängers einer Empfangseinheit von einer Mikrowellenschranke, die eingerichtet ist, eine Dämpfung des Mikrowellen-Signals, basierend auf einem zugeordneten Mikrowellen-Frequenz-Kanal, selektiv zu detektieren.

Die Oszillatorschaltung 600 entspricht der Oszillatorschaltung 600 der Figur 6. Diese Oszillatorschaltung 600 ist somit eingerichtet, ein Lokaloszillator (LO)-Signal für einen Mischer 709 zu generieren. Ein entsprechendes Empfangssignal, welches von der Empfangsantenne 710 empfangen wird, wird mit dem LO-Signal im Mischer 709 in ein sehr viel niederfrequenteres Zwischenfrequenzsignal heruntergemischt. Der Frequenzunterschied zwischen LO-Signal und Empfangssignal ist ein fester Wert und bestimmt die Frequenz des Zwischenfrequenzsignals. Das Zwischenfrequenzsignal passiert anschließend ein Bandpassfilter 711 und wird in einem Zwischenfrequenzverstärker 712 verstärkt. Anschließend erfolgt beispielsweise eine Abtastung des Signals in einem AD-Wandler 713 und die Weiterverarbeitung und Auswertung des Empfangspegels im Prozessor 608. Alternativ zu dem AD-Wandler 713 kann auch ein logarithmischer Verstärker zum Einsatz kommen.

Die Frequenzabstimmung der Empfängerschaltung auf verschiedene Mikrowellen-Frequenz-Kanäle erfolgt in gleicher Weise wie bei der Senderschaltung 600. Auch ein sequenzielles Durchstimmen auf die verwendeten Kanäle, zum selektiven Empfangen unterschiedlicher Mikrowellen-Frequenz-Kanäle, wie es beispielsweise von der Empfangseinheit, die mittels der Figur 5 beschrieben ist, kann dadurch realisiert werden.

Alternativ kann anstatt des sequenziellen Durchstimmens des Empfängers auf jeden benutzten Kanal auch das komplette benutzte Frequenzspektrum im jeweiligen erlaubten Frequenzband in den Zwischenfrequenzbereich gemischt werden. Voraussetzung hierbei ist, dass das Bandpassfilter 711 und die nachfolgenden Komponenten im Signalpfad "breit" genug sind, um das jeweilige Frequenz-Band zusammen verarbeiten zu können. Um die einzelnen Pegel in den benutzten Mikrowellen-Frequenz-Kanälen zu bestimmen, kann hierzu das Zwischenfrequenzsignal abgetastet werden und mittels einer Fourier-Transformation vom Zeitbereich in den Frequenzbereich transformiert werden. Aus dem entstehenden Zwischenfrequenzspektrum lassen sich dann die Empfangspegel selektiv den einzelnen benutzten Kanälen zuordnen.

Die Senderschaltung 600 der Figur 6 bzw. 7 kann sowohl aus Einzelkomponenten als auch integriert in einem integrierten Schaltkreis, ausgeführt sein. Dies gilt insbesondere für die Komponenten: spannungsgesteuerter Mikrowellenoszillator 601; PLL-Baustein 602; Schleifenfilter 604; Koppler 605; Vorteiler 606 und den Prozessor 608, welche prädestiniert sind, auf einem gemeinsamen Chip integriert zu werden.

In der Empfängerschaltung der Figur 7 könnten die zusätzlichen Komponenten Mischer 709, Bandpassfilter 711, Zwischenfrequenzverstärker 712 und der AD-Wandler 713 zusätzlich noch integriert werden. Eine Integration von lediglich Teilkomponenten der genannten Bauteile ist ebenfalls möglich.

Im Allgemeinen weisen käufliche PLL-Bausteine einen Modulationseingang auf, mit dessen Hilfe auf das CW-Ausgangssignal (CW: continuous wave) der Oszillatorschaltung 600 der Figur 6 mittels zum Beispiel einer FSK (FSK: Frequency Shift Keying) oder PSK (PSK: Phase Shift Keying) - Modulation oder anderen Modulationsarten Informationen aufgebracht werden können.

## Patentansprüche

1. Mikrowellenschranken-System, mit:
einer ersten Mikrowellenschranke (110), deren Mikrowellen-Sendeeinheit einen elektrisch abstimmbaren Mikrowellen-Generator (600) aufweist, wobei die erste Mikrowellenschranke (110) eingerichtet ist, mit einer wählbaren Mikrowellen-Frequenz betrieben zu werden; und zumindest
einer zweiten Mikrowellenschranke (120), deren Mikrowellen-Sendeeinheit einen elektrisch abstimmbaren Mikrowellen-Generator (600) aufweist, wobei die zweite Mikrowellenschranke (120) eingerichtet ist, mit einer wählbaren Mikrowellen-Frequenz betrieben zu werden;
und wobei das Mikrowellenschranken-System eingerichtet ist, Mikrowellen-Frequenz-Kanäle (210) in einem verfügbaren Frequenzbereich für Mikrowellenschranken für eine bereitgestellte Anzahl von Mikrowellenschranken des Mikrowellenschranken-Systems zu bestimmen; und den jeweiligen Mikrowellenschranken (110, 120) des Mikrowellenschranken-Systems jeweils einen Mikrowellen-Frequenz-Kanal (210) so zuzuordnen, dass eine gegenseitige Störung der Mikrowellenschranken (110, 120) vermindert wird.

2. Mikrowellenschranken-System gemäß Anspruch 1, wobei die erste Mikrowellenschranke (110) und die zweite Mikrowellenschranke (120) jeweils eine Empfangseinheit (550) aufweist; und wobei die jeweilige Empfangseinheit mit der jeweiligen Mikrowellen-Sendeeinheit (110, 120) mittels eines Mikrowellen-Signals, basierend auf dem jeweiligen Mikrowellen-Frequenzkanal, gekoppelt ist, um einen Kopplungs-Pfad zwischen der jeweiligen Mikrowellen-Sendeeinheit und der jeweiligen Empfangseinheit aufzubauen; und insbesondere das Mikrowellenschranken-System eingerichtet ist, eine Dämpfung des Mikrowellen-Signals in dem jeweiligen Kopplungs-Pfad zu bestimmten.

3. Mikrowellenschranken-System gemäß Anspruch 2, wobei die Empfangseinheit zumindest einer Mikrowellenschranke (110, 120) eingerichtet ist, die Dämpfung des Mikrowellen-Signals basierend auf einem, insbesondere mittels der Empfangseinheit selektierten, Mikrowellen-Frequenz-Kanal (210) zu bestimmen.

4. Mikrowellenschranken-System gemäß einem der vorhergehenden Ansprüche, wobei das Mikrowellenschranken-System eingerichtet ist, abhängig von einer bereitgestellten Anordnung der jeweiligen Mikrowellenschranken (110, 120) in dem Mikrowellenschranken-System den jeweiligen Mikrowellenschranken (110, 120) einen jeweiligen Mikrowellen-Frequenz-Kanal (210) so zuzuordnen, dass räumlich angrenzenden Mikrowellenschranken (110, 120) des Mikrowellenschranken-Systems Frequenz-Kanäle (210) so zugeordnet werden, dass eine gegenseitige Störung durch Mikrowellen-Einstrahlung räumlich benachbarter Mikrowellenschranken (110, 120) in dem Mikrowellenschranken-System vermindert wird.

5. Mikrowellenschranken-System gemäß Anspruch 4, wobei das Mikrowellenschranken-System eingerichtet ist, abhängig von der bereitgestellten Anordnung der jeweiligen Mikrowellenschranken in dem Mikrowellenschranken-System den Mikrowellenschranken (110, 120) Mikrowellen-Frequenz-Kanäle (210) so zuzuordnen, dass jeweils räumlich aneinander angrenzenden Mikrowellenschranken (110, 120) des Mikrowellenschranken-Systems frequenzmäßig nicht angrenzende Mikrowellen-Frequenz-Kanäle (210) zugeordnet werden.

6. Mikrowellenschranken-System gemäß einem der vorhergehenden Ansprüche, wobei zumindest eine der Mikrowellenschranken (110, 120) eingerichtet ist, basierend auf einem modulierten Mikrowellen-Signal betrieben zu werden, um eine gegenseitige Störung von zumindest zwei Mikrowellenschranken (110, 120), die räumlich benachbart betrieben werden, in dem Mikrowellenschranken-System zu vermindern.

7. Mikrowellenschranken-System gemäß Anspruch 6, wobei die Mikrowellen-Sendeeinheit der zumindest einen Mikrowellenschranke (110, 120) eingerichtet ist, ein Mikrowellen-Signal zu generieren, das moduliert ist; und eine mit der so eingerichteten Mikrowellen-Sendeeinheit gekoppelten Empfangseinheit eingerichtet ist, eine Dämpfung des Mikrowellen-Signals, basierend auf dem modulierten Mikrowellen-Signal, selektiv zu detektieren.

8. Mikrowellenschranken-System gemäß Anspruch 6 oder 7, wobei das jeweilige Mikrowellen-Signal zumindest einer Mikrowellenschranke (110, 120) des Mikrowellenschranken-Systems mit einem Code moduliert ist, und die jeweilige Mikrowellenschranke eingerichtet ist, basierend auf dem, mit dem Code modulierten Mikrowellen-Signal, betrieben zu werden.

9. Mikrowellenschranken-System gemäß einem der vorhergehenden Ansprüche, wobei eine einzelne Empfangseinheit sowohl die Empfangseinheit der ersten Mikrowellenschranke (110) als auch die Empfangseinheit der zweiten Mikrowellenschranke (120) ist.

10. Mikrowellenschranken-System gemäß einem der vorhergehenden Ansprüche, das eingerichtet ist, die Mikrowellen-Frequenz-Kanäle (210) den jeweiligen Mikrowellen-Sendeeinheiten, und insbesondere den Mikrowellen-Empfangseinheiten, der jeweiligen Mikrowellenschranken (110, 120) des Mikrowellenschranken-Systems zeitlich aufeinanderfolgend und/oder zeitlich zyklisch zuzuordnen.

11. Mikrowellenschranken-System gemäß einem der Ansprüche 6 bis 10, bei dem zumindest eine Mikrowellenschranke (110, 120) eingerichtet ist, die Mikrowellen-Sendeeinheit mit der gekoppelten Empfangseinheit, mittels des modulierten Mikrowellen-Signals, signalmäßig zu koppeln, um Informationen von der Mikrowellen-Sendeeinheit zu der jeweils zugeordneten Empfangseinheit zu übertragen.

12. Verfahren zum Betreiben eines Mikrowellenschranken-Systems, das eine erste Mikrowellenschranke (110) aufweist, wobei die erste Mikrowellenschranke (110) eingerichtet ist, mit einer wählbaren Mikrowellen-Frequenz betrieben zu werden; und
zumindest eine zweite Mikrowellenschranke (120) aufweist, wobei die zweite Mikrowellenschranke (120) eingerichtet ist, mit einer wählbaren Mikrowellen-Frequenz betrieben zu werden, mit:
Bereitstellen einer Anzahl von Mikrowellenschranken, die in dem Mikrowellenschranken-System betrieben werden;
Bereitstellen eines verfügbaren Frequenzbereichs für den Betrieb des Mikrowellenschranken-Systems;
Bestimmen von verfügbaren Mikrowellen-Frequenz-Kanälen (210) für den Betrieb des Mikrowellenschranken-Systems;
Zuordnen der verfügbaren Mikrowellen-Frequenz-Kanälen (210) zu der Anzahl von Mikrowellenschranken in so einer Weise, dass eine gegenseitige Störung der Mikrowellenschranken (110, 120) verringert wird.

13. Verfahren gemäß Anspruch 12, mit den zusätzlichen Schritten:
Bereitstellen einer Anordnung der jeweiligen Mikrowellenschranken (110, 120) in dem Mikrowellenschranken-System;
Zuordnen der Mikrowellen-Frequenz-Kanäle (210) zu räumlich angrenzenden Mikrowellenschranken, so dass eine gegenseitige Störung durch Mikrowellen-Einstrahlung räumlich benachbarter Mikrowellenschranken (110, 120) in dem Mikrowellenschranken-System vermindert wird; und/oder
Zuordnen der Mikrowellen-Frequenz-Kanäle (210) an die jeweiligen Mikrowellenschranken (110, 120) der Anzahl der Mikrowellenschranken so, dass jeweils räumlich aneinander angrenzenden Mikrowellenschranken (110, 120) des Mikrowellenschranken-Systems frequenzmäßig nicht angrenzende Frequenz-Kanäle zugeordnet werden.

14. Computerprogramm, umfassend Befehle, die bei der Ausführung des Computerprogramms durch einen Computer diesen veranlassen, das Verfahren gemäß Anspruch 12 oder 13 auszuführen.

15. Verwendung eines Mikrowellenschranken-Systems gemäß Anspruch 1 bis 11, zur Überwachung einer Position eines Objektes, wobei das Objekt insbesondere Schüttgut ist.
